(19) Europäisches Patentamt
European Patent Office
Office européen des brevets

(11) **EP 4 554 211 A1**

(12) **EUROPEAN PATENT APPLICATION**
published in accordance with Art. 153(4) EPC

(43) Date of publication:
**14.05.2025 Bulletin 2025/20**

(21) Application number: 23835825.3

(22) Date of filing: **05.07.2023**

(51) International Patent Classification (IPC):
*H04N 19/11* (2014.01)    *H04N 19/593* (2014.01)
*H04N 19/105* (2014.01)   *H04N 19/70* (2014.01)
*H04N 19/82* (2014.01)    *H04N 19/176* (2014.01)

(52) Cooperative Patent Classification (CPC):
**H04N 19/105; H04N 19/11; H04N 19/176;
H04N 19/593; H04N 19/70; H04N 19/82**

(86) International application number:
**PCT/KR2023/009499**

(87) International publication number:
**WO 2024/010359 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.07.2022 KR 20220082610**

(71) Applicant: **LG Electronics Inc.
Yeongdeungpo-gu
Seoul 07336 (KR)**

(72) Inventors:
• **YOO, Sunmi
  Seoul 06772 (KR)**
• **NAM, Junghak
  Seoul 06772 (KR)**
• **CHOI, Jangwon
  Seoul 06772 (KR)**

(74) Representative: **Maikowski & Ninnemann
Patentanwälte Partnerschaft mbB
Postfach 15 09 20
10671 Berlin (DE)**

(54) **IMAGE ENCODING/DECODING METHOD AND APPARATUS, AND RECORDING MEDIUM HAVING BITSTREAM STORED THEREIN**

(57)    An image decoding/encoding method and apparatus according to the present disclosure may: derive linear prediction parameters for the current block from neighboring regions adjacent to the current block; and generate a prediction sample of the current block on the basis of the linear prediction parameters. Here, the linear prediction parameters may include at least one of a weighted value relating to the amount of change in sample values of the neighboring regions and a certain offset.

FIG.4

```
DERIVE LINEAR PREDICTION PARAMETER
FROM NEIGHBORING REGION
OF CURRENT BLOCK                          ~ S400

                    ↓

OBTAIN PREDICTION SAMPLE
OF CURRENT BLOCK
BASED ON LINEAR PREDICTION PARAMETER      ~ S410
```

EP 4 554 211 A1

**Description**

[Technical Field]

The present disclosure relates to an image encoding/decoding method and apparatus, and a recording medium storing a bitstream.

[Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

[Disclosure]

[Technical Problem]

The present disclosure is to provide a method and a device for configuring an intra prediction-based prediction block in encoding/decoding a still image or video.

The present disclosure is to provide a method and a device for signaling an intra prediction method based on linear prediction.

[Technical Solution]

An image decoding method and device according to the present disclosure may derive a linear prediction parameter for a current block from a neighboring region adjacent to the current block and obtain a prediction sample of the current block based on the linear prediction parameter. Here, the linear prediction parameter may include at least one of one or more weights and a predetermined offset. The one or more weights may include at least one of a first weight for a horizontal variation or a second weight for a vertical variation. The neighboring region may include at least one of a left neighboring region, a top neighboring region, a top-left neighboring region, a top-right neighboring region or a bottom-left neighboring region.

In an image decoding method and device according to the present disclosure, the horizontal variation and the vertical variation may be calculated for one or more windows within the neighboring region, respectively.

In an image decoding method and device according to the present disclosure, a neighboring region for calculating the horizontal variation and a neighboring region for calculating the vertical variation may be different from each other.

In an image decoding method and device according to the present disclosure, the horizontal variation may be calculated for one or more first windows belonging to at least one of the top neighboring region, the top-left neighboring region or the top-right neighboring region and the vertical variation may be calculated for one or more second windows belonging to at least one of the left neighboring region, the top-left neighboring region or the bottom-left neighboring region.

In an image decoding method and device according to the present disclosure, the one or more first windows may include at least one of a window to which a sample having the same x-coordinate as a top-left sample of the current block belongs or a window to which a sample having the same x-coordinate as a top-right sample of the current block belongs and the one or more second windows may include at least one of a window to which a sample having the same y-coordinate as a top-left sample of the current block belongs or a window to which a sample having the same y-coordinate as a bottom-left sample of the current block belongs.

In an image decoding method and device according to the present disclosure, the offset may be derived based on one or more samples adjacent to the current block.

In an image decoding method and device according to the present disclosure, one or more samples adjacent to the current block may include at least one of a sample having the same x-coordinate as the prediction sample or a sample having the same y-coordinate as the prediction sample.

In an image decoding method and device according to the present disclosure, the linear prediction parameter may be derived based on whether the neighboring region is available for a current block.

In an image decoding method and device according to the present disclosure, at least one of a width and a height of the one or more windows may be greater than or equal to 3.

In an image decoding method and device according to the present disclosure, any one of a width and a height of the one or more windows may be equal to 1.

In an image decoding method and device according to the present disclosure, a step of obtaining a first flag representing whether linear prediction-based intra prediction is applied to the current block from a bitstream is further included and the linear prediction parameter may be adaptively derived based on the first flag.

In an image decoding method and device according to the present disclosure, a second flag representing whether the current block is a block encoded in a DIMD mode may be obtained from a bitstream and a third flag representing whether the current block is a block encoded in a general DIMD mode may be obtained from the bitstream based on the second flag. Here, the linear prediction parameter may be adaptively derived based on the third flag.

An image encoding method and device according to the present disclosure may derive a linear prediction parameter for the current block from a neighboring region adjacent to a current block and generate a prediction sample of the current block based on the linear prediction parameter. Here, the linear prediction parameter may include at least one of one or more weights and a predetermined offset. The one or more weights may include at least one of a first weight for a horizontal variation or a second weight for a vertical variation. The neighboring region may include at least one of a left neighboring region, a top neighboring region, a top-left neighboring region, a top-right neighboring region or a bottom-left neighboring region.

A computer readable digital storage medium storing instructions that cause a decoding device according to the present disclosure to perform an image decoding method is provided.

A computer-readable digital storage medium storing video/image information generated according to the image encoding method according to the present disclosure is provided.

A method and a device for transmitting video/image information generated according to an image encoding method according to the present disclosure are provided.

[Advantageous Effects]

According to the present disclosure, in encoding/decoding a still image or video, intra prediction considering linear characteristics of a pre-reconstructed sample in a neighboring region may be performed, improving the performance of intra prediction and further improving encoding efficiency.

According to the present disclosure, an intra prediction method based on linear prediction may be adaptively signaled according to a predetermined priority in a relationship with another intra prediction method pre-defined in an encoding device and a decoding device, improving the encoding efficiency of intra prediction.

[Description of Drawings]

FIG. 1 shows a video/image coding system according to the present disclosure.

FIG. 2 shows a schematic block diagram of an encoding apparatus to which an embodiment of the present disclosure is applicable and encoding of video/image signals is performed.

FIG. 3 shows a schematic block diagram of a decoding apparatus to which an embodiment of the present disclosure is applicable and decoding of video/image signals is performed.

FIG. 4 shows an intra prediction method performed by a decoding device as an embodiment according to the present disclosure.

FIG. 5 relates to a method for calculating a sample value variation based on a 3x3 filter according to the present disclosure.

FIG. 6 relates to a method for calculating a sample value variation based on a 1D filter according to the present disclosure.

FIG. 7 shows a schematic configuration of an intra predictor 331 performing an intra prediction method according to the present disclosure.

FIG. 8 shows an intra prediction method performed by an encoding device as an embodiment according to the present disclosure.

FIG. 9 shows a schematic configuration of an intra predictor 222 performing an intra prediction method according to the present disclosure.

FIG. 10 shows an example of a contents streaming system to which embodiments of the present disclosure may be applied.

[Best Mode]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular region composed of a plurality of CTUs within a specific tile column and a specific tile row of one picture. A tile column is a rectangular region of CTUs having the same height as that of a picture and a width designated by a syntax requirement of a picture parameter set. A tile row is a rectangular region of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular region of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific region of a picture and information related to a corresponding region. One unit may include one luma block and two chroma (ex. cb, cr) blocks. In some cases, a unit may be used interchangeably with a term such as a block or an region, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

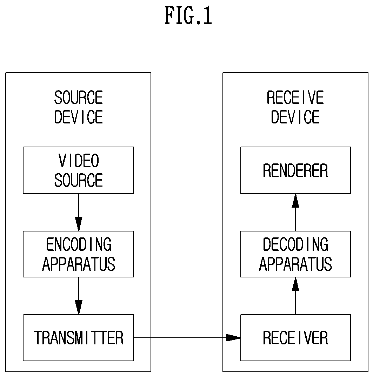

FIG. 1 shows a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding apparatus and a transmission unit. The receiving device may include a reception unit, a decoding apparatus and a renderer. The encoding apparatus may be referred to as a video/image encoding apparatus and the decoding apparatus may be referred to as a video/image decoding apparatus. A transmitter may be included in an encoding apparatus. A receiver may be included in a decoding apparatus. A renderer may include a display unit, and a display unit may be composed of a separate device or an external component.

A video source may obtain a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding apparatus may encode an input video/image. An encoding apparatus may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding apparatus.

A decoding apparatus may decode a video/an image by performing a series of procedures such as dequantization, inverse transform, prediction, etc. corresponding to an operation of an encoding apparatus.

A renderer may render a decoded video/image. A rendered video/image may be displayed through a display unit.

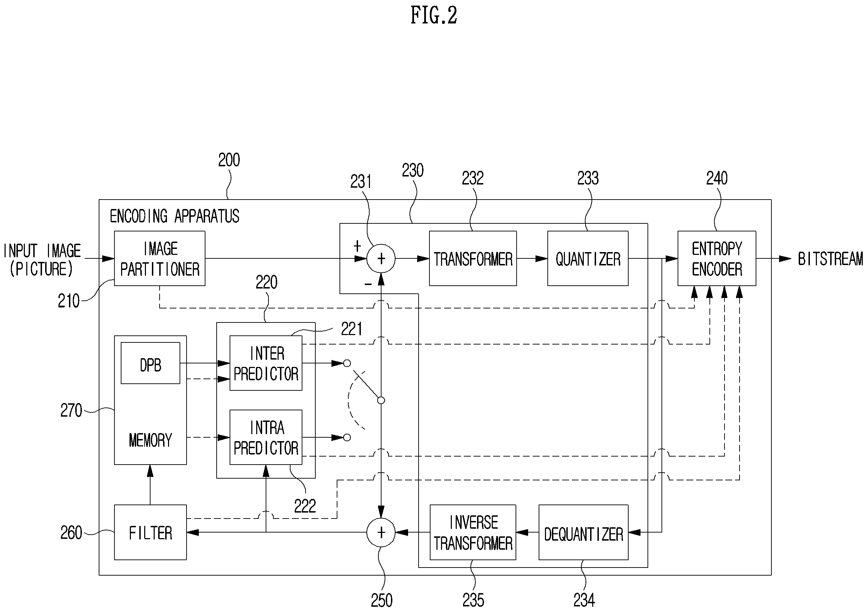

FIG. 2 shows a rough block diagram of an encoding apparatus to which an embodiment of the present disclosure may be applied and encoding of a video/image signal is performed.

Referring to FIG. 2, an encoding apparatus 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) accorrding to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding apparatus 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an region, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding apparatus 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding apparatus 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a neighboring block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form. . The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding apparatus to a decoding apparatus may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding apparatus 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding apparatus may avoid prediction mismatch in an encoding apparatus 200 and a decoding apparatus, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

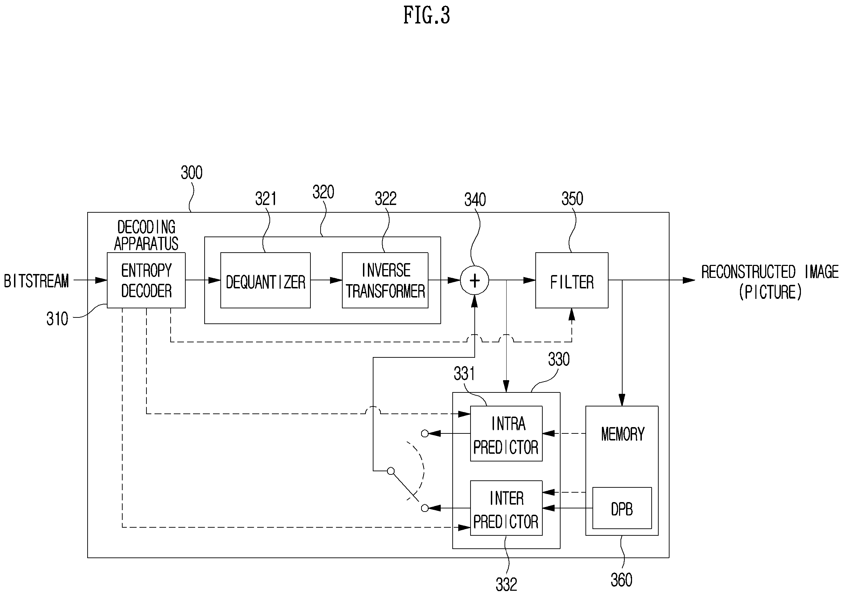

FIG. 3 shows a rough block diagram of a decoding apparatus to which an embodiment of the present disclosure may be applied and decoding of a video/image signal is performed.

Referring to FIG. 3, a decoding apparatus 300 may be configured by including an entropy decoder 310, a residual processor 320, a predictor 330, an adder 340, a filter 350 and a memory 360. A predictor 330 may include an inter predictor 331 and an intra predictor 332. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding apparatus 300 may reconstruct an image in response to a process in which video/image information is processed in an encoding apparatus of FIG. 2. For example, a decoding apparatus 300 may derive units/blocks based on block partition-related information obtained from the bitstream. A decoding apparatus 300 may perform decoding by using a processing unit applied in an encoding apparatus. Accordingly, a processing unit of decoding may be a coding unit, and a coding unit may be partitioned from a coding tree unit or the large coding unit according to a quad tree structure, a binary tree structure and/or a ternary tree structure. At least one transform unit may be derived from a coding unit. And, a reconstructed image signal decoded and output through a decoding apparatus 300 may be played through a playback device.

A decoding apparatus 300 may receive a signal output from an encoding apparatus of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding apparatus may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a neighboring block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding apparatus may be further configured as an internal/external element of a decoding apparatus 300 or a reception unit may be a component of an entropy decoder 310.

Meanwhile, a decoding apparatus according to this specification may be referred to as a video/image/picture decoding apparatus, and the decoding apparatus may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding apparatus. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter predictor 332. A memory 360 may store motion information of a block from which motion information in a current picture is derived (or decoded) and/or motion information of blocks in a pre-reconstructed picture. The stored motion information may be transmitted to an inter predictor 260 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding apparatus 200 may be also applied equally or correspondingly to a filter 350, an inter predictor 332 and an intra predictor 331 of a decoding apparatus 300, respectively.

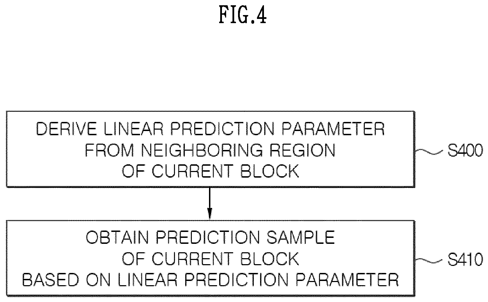

FIG. 4 shows an intra prediction method performed by a decoding device as an embodiment according to the present disclosure.

According to the present disclosure, a linear prediction parameter may be derived by using a predetermined filter that derives a variation in a sample value and a pre-reconstructed sample value belonging to the neighboring region of a current block and perform intra prediction based thereon. It is referred to as linear prediction-based intra prediction hereinafter.

Referring to FIG. 4, a linear prediction parameter may be derived from the neighboring region of a current block S400.

A linear prediction parameter according to the present disclosure may include at least one of one or more weights and a predetermined offset. The one or more weights may be derived based on the sample value variation of a neighboring region adjacent to a current block.

Specifically, one or more windows may be defined within the neighboring region of a current block. The neighboring region is a region that is pre-reconstructed before a current block, and may refer to a region to which a predetermined filter may be applied. The neighboring region may include at least one of the left neighboring region, the top neighboring region or the top-left neighboring region of a current block. Here, a left neighboring region may further include a region adjacent to the bottom-left of a current block other than a region adjacent to the left of a current block. A top neighboring region may further include a region adjacent to the top-right of a current block other than a region adjacent to the top of a current block. The window may refer to a region to which a filter for calculating a sample value variation is applied. The size of the window may have the same size as the filter. The window may be defined so that a plurality of windows are allowed to overlap each other within a neighboring region or may also be defined so that a plurality of windows are not allowed to overlap each other within a neighboring region.

A sample value variation may be calculated for each window within the neighboring region. Here, a sample value variation may include at least one of a sample value variation in a x-axis direction (hereinafter, referred to as a horizontal variation) or a sample value variation in a y-axis direction (hereinafter, referred to as a vertical variation). To this end, a first filter for calculating the horizontal variation and a second filter for calculating the vertical variation may be defined, respectively.

The filter may have a size of NxM and N and M may be an integer of 1, 2, 3 or more. N and M may be the same value or a different value. As an example, the filter may be 3x3, 1x3, 3x1, 2x3, 3x2, 2x4 or 4x2. As an example of the filter, a Sobel filter, a derivative filter, etc. may be used.

Meanwhile, any one of a plurality of candidate filters that are pre-defined equally for an encoding device and a decoding device may be selectively used. The plurality of candidate filters may be different in at least one of a filter size or a filter coefficient. For the selective use, index information indicating any one of a plurality of candidate filters may be signaled. Alternatively, any one of a plurality of candidate filters may be adaptively selected based on the encoding parameter of a current block. Here, an encoding parameter may include at least one of a size, a shape, whether a current block is positioned at the boundary of a coding tree block, whether an intra prediction mode is a non-directional mode, the angle of an intra prediction mode or whether sub-partition-based intra prediction is applied. A filter for a horizontal variation and a filter for a vertical variation may be different from each other. A filter applied to the left neighboring region of a current block and a filter applied to the top neighboring region of a current block may be different from each other.

Based on a sample value variation calculated for each window within the neighboring region, at least one of a first weight for a horizontal variation or a second weight for a vertical variation may be derived.

The first weight may be derived based on a horizontal variation for one or more windows within the neighboring region. The first weight may be derived as a horizontal variation for one window within the neighboring region. The first weight may be derived as any one of horizontal variations for a plurality of windows within the neighboring region (e.g., the maximum value, the minimum value, a median). The first weight may be derived as the weighted average value of horizontal variations for a plurality of windows within the neighboring region. Similarly, the second weight may be derived based on a vertical variation for one or more windows within the neighboring region. The second weight may be derived as a vertical variation for one window within the neighboring region. The second weight may be derived as any one of vertical variations for a plurality of windows within the neighboring region (e.g., the maximum value, the minimum value, a median). The second weight may be derived as the weighted average value of vertical variations for a plurality of windows within the neighboring region.

The horizontal/vertical variation may be calculated for all available windows within the neighboring region, respectively.

Alternatively, a neighboring region for calculating a horizontal variation and a neighboring region for calculating a vertical variation may be different from each other. As an example, the horizontal variation may be calculated for one or more windows within the top neighboring region of a current block and the vertical variation may be calculated for one or more windows within the left neighboring region of a current block. The horizontal variation may be calculated for one or more windows within the left neighboring region of a current block and the vertical variation may be calculated for one or more windows within the top neighboring region of a current block. The horizontal variation may be calculated for one or more windows within the left neighboring region and the top-left neighboring region of a current block and the vertical variation may be calculated for one or more windows within the top neighboring region and the top-left neighboring region of a current block.

Alternatively, among the windows for calculating a horizontal/vertical variation described above, a horizontal/-vertical variation may be calculated only for a window at a partial position. As an example, a windows at the partial position may include at least one of a first window including a sample having the same x-coordinate as the top-left sample of a current block, a second window including a sample having the same x-coordinate as the top-right sample of a current block, a third window including a sample having the same x-coordinate as the center sample of the current block, a fourth window including a sample having the same y-coordinate as the top-left sample of a current block, a fifth window including a sample having the same y-coordinate as the bottom-left sample of a current block or a sixth window including a sample having the same y-coordinate as the center sample of the current block. The horizontal and vertical variation may be calculated for a window at the partial position, respectively, and may not be calculated for the remaining windows. The horizontal variation may be calculated for at least one of the first to third windows and may not be calculated for the remaining windows. The vertical variation may be calculated for at least one of the fourth to sixth windows and may not be calculated for the remaining windows.

A predetermined offset may be defined as the maximum value, the minimum value, a median value or a weighted average value of samples belonging to the neighboring region of a current block. The offset may be commonly applied to all samples in a current block regardless of the position (or coordinate) of a current sample to be predicted in a current block. As an example, the offset may be derived as the maximum value, the minimum value, a median value or a weighted average value of all samples belonging to the neighboring region. The offset may be derived as the maximum value, the minimum value, a median value or a weighted average value of all samples used to calculate the sample value variation. The offset may be derived as the maximum value, the minimum value, a median value or a weighted average value of left and top samples adjacent to a current block among all samples belonging to the neighboring region. Alternatively, the offset may be derived depending on the position (or coordinate) of a current sample to be predicted in a current block. As an example, the offset may be derived as the maximum value, the minimum value, a median value or a weighted average value of a sample having the same x-coordinate as the current sample and a sample having the same y-coordinate as the current sample.

Alternatively, the offset may be derived based on the horizontal variation and/or the vertical variation. Alternatively, an offset derived based on the horizontal variation and/or the vertical variation is distinct from an offset defined as the maximum value, the minimum value, a median value or a weighted average value of samples belonging to the above-described neighboring region, and may be additionally included in the linear prediction parameter.

When all samples in the neighboring region are not available, first and second weights may be derived as 0, respectively, and an offset may be derived as a median value according to the bit depth of a sample. As an example, in a 10-bit image, an offset may be derived as 512. Alternatively, when all samples in the neighboring region are not available, the sample of a neighboring region may be replaced with a median value according to the bit depth of a sample and based thereon, a first/second weight and an offset may be derived through the above-described method.

Alternatively, when only a left neighboring region is available within the neighboring region, a second weight and an offset may be derived through the above-described method and a first weight may be derived as 0. When only a left neighboring region is available within the neighboring region, a first/second weight and an offset may be derived through the above-described method based on a left neighboring region. Alternatively, when only a top neighboring region is available within the neighboring region, a first weight and an offset may be derived through the above-described method and a second weight may be derived as 0. When only a top neighboring region is available within the neighboring region, a first/second weight and an offset may be derived through the above-described method based on a top neighboring region. Alternatively, when there is at least one unavailable sample within the neighboring region, a corresponding unavailable sample may be replaced with an available sample in a neighboring region and then, a first/second weight and an offset may be derived through the above-described method.

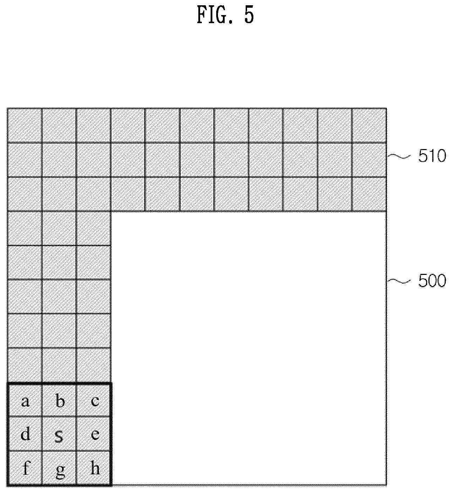

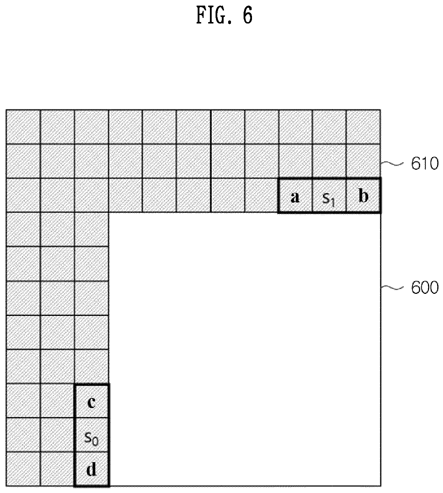

A method for calculating a sample value variation according to the present disclosure is described in detail by referring to FIGS. 5 and 6.

Referring to FIG. 4, the prediction sample of a current block may be obtained based on a derived linear prediction parameter S410.

Specifically, the prediction sample of a current block may be obtained based on the linear prediction parameter and the position of the prediction sample. As an example, the prediction sample of a current block may be obtained by applying a first weight and a second weight described above to the position of a prediction sample and adding a predetermined offset thereto, which may be expressed as in Equation 1 below.

$$[Equation\ 1]$$
$$Pred_{(x,y)} = w1*x + w2*y + offset$$

In Equation 1, $Pred_{(x,y)}$ represents a prediction sample of a (x, y) coordinate. w1 and w2 represent a first weight and a second weight described above, respectively, and offset represents an offset described above. x and y may represent the x-coordinate and the y-coordinate of a prediction sample, respectively. However, it is not limited thereto, and x and y may represent the variable of a x-axis component and the variable of a y-axis component derived based on the position of a prediction sample, respectively.

The Equation 1 is just an example, and the prediction sample of a current block may be obtained by applying a first weight and a second weight described above to the position of a prediction sample without adding the offset. Alternatively, the prediction sample of a current block may be obtained by applying any one of a first weight or a second weight to the position of a prediction sample without adding the offset. Alternatively, the prediction sample of a current block may be obtained by applying any one of a first weight or a second weight to the position of a prediction sample and adding the offset thereto.

Alternatively, the prediction sample of the current block may be obtained as in Equation 2 below.

$$Pred_{(x,y)} = min(2^{BitDepth} - 1, max(0, w1 * x + w2 * y + offset)) \qquad [Equation\ 2]$$

In Equation 2, w1, w2, x, y and offset are the same as described in Equation 1. According to Equation 2, a prediction sample according to a linear prediction parameter may be obtained and the minimum value between the prediction sample and the maximum value according to the bit depth of a sample (i.e., $2^{BitDepth}$ - 1) may be derived as the prediction sample of a current block.

The above-described linear prediction-based intra prediction may be adaptively performed based on a flag representing whether linear prediction-based intra prediction is applied to a current block. As an example, a flag which is a first value may represent that linear prediction-based intra prediction is applied to a current block and a flag which is a second value may represent that linear prediction-based intra prediction is not applied to a current block.

Information on linear prediction-based intra prediction may be signaled so that an encoding device and a decoding device may perform the above-described linear prediction-based intra prediction in the same manner. The information on linear prediction-based intra prediction may include the flag and the flag may be defined in a unit (e.g., a CU, a PU) where intra prediction is performed.

The flag may be signaled before intra prediction-related information pre-defined for an encoding device and a decoding device. Alternatively, whether the flag is signaled may be determined based on at least one of the pre-defined intra prediction-related information. Here, pre-defined intra prediction-related information may include at least one of a flag representing whether most probable mode(MPM)-based intra prediction is performed, a flag representing whether planar mode-based intra prediction is performed, a flag representing whether matrix-based intra prediction (MIP) is performed, a flag representing whether intra sub-partitions prediction (ISP) is performed, a flag representing whether decoder-side intra mode derivation (DIMD) is applied or a flag representing whether linear interpolation intra prediction (LIP) is performed.

Alternatively, linear prediction-based intra prediction may be defined as a part of a DIMD mode. As an example, when a current block is encoded in a DIMD mode, a flag (general_dimd_flag) representing whether general DIMD is applied to a current block may be additionally signaled. A first value, general_dimd_flag, may represent that general DIMD is applied to a current block and a second value, general_dimd_flag, may represent that linear prediction-based intra prediction is applied to a current block. In other words, when it is determined that a current block is a block encoded in a DIMD mode according to a flag (dimd_flag) representing whether DIMD is applied, general_dimd_flag may be additionally signaled to determine whether a current block is a block encoded in a general DIMD mode or a block encoded by linear prediction-based intra prediction. Conversely, when it is determined that a current block is not a block encoded in a DIMD mode according to dimd_flag, general_dimd_flag may not be signaled.

The DIMD mode may be a method for calculating a gradient based on at least two samples belonging to the neighboring region of a current block and deriving the intra prediction mode of a current block based on at least one of the calculated gradient or the amplitude of a gradient. Through this derivation method, one or more intra prediction modes may be derived for a current block. A prediction block may be generated based on a derived intra prediction mode, respectively, and a final prediction block may be generated through a weighted sum thereof.

As an example, a gradient may be calculated in a unit of a window having a predetermined size. An angle representing the directionality of a sample within a corresponding window may be calculated based on a calculated gradient. A calculated angle may correspond to any one of a plurality of pre-defined intra prediction modes (i.e., directional modes). The amplitude of the gradient may be stored/updated for an intra prediction mode corresponding to the calculated angle. Through this process, an intra prediction mode corresponding to a calculated gradient may be determined for each window and the amplitude of a gradient may be stored/updated for a determined intra prediction mode. Top T intra prediction modes having the largest amplitude among the amplitudes of the stored gradient may be selected and a selected intra prediction mode may be configured as the intra prediction mode of a current block. Here, T may be an integer of 1, 2, 3 or more.

FIG. 5 relates to a method for calculating a sample value variation based on a 3x3 filter according to the present disclosure.

Referring to FIG. 5, the range of a neighboring region 510 for deriving a sample value variation and/or an offset is shown. Here, a neighboring region may include at least one of the left neighboring region, the top neighboring region or the top-left neighboring region of a current block 500. The neighboring region may include three reference lines. The three reference lines may be composed of one adjacent reference line adjacent to a current block and two non-adjacent reference lines not adjacent to a current block.

A filter may be applied in a 3x3 window unit within the neighboring region to calculate at least one of a horizontal variation or a vertical variation. Each window may include one reference sample (S) and eight neighboring samples (a to h) adjacent to a reference sample.

In a first filter for calculating the horizontal variation, the absolute value of a filter coefficient applied to neighboring samples positioned on the same horizontal line as a reference sample (S) may be greater than the absolute value of a filter coefficient applied to other neighboring samples. The absolute value of a filter coefficient applied to other neighboring samples may be the same. As an example, a first filter for calculating a horizontal variation may be defined as in Equation 3 below.

[Equation 3]

$$V_x = (-a + c - 2*d + 2*e - f + h)/8$$

In Equation 3, $V_x$ represents a horizontal variation, and a, c, d, e, f and h represent a top-left sample, a top-right sample, a left sample, a right sample, a bottom-left sample and a bottom-right sample, respectively, based on a reference sample (S). According to Equation 3, a horizontal variation in a corresponding window may be calculated through a weighted sum operation based on a distance from a reference sample.

In a second filter for calculating the vertical variation, the absolute value of a filter coefficient applied to neighboring samples positioned on the same vertical line as a reference sample (S) may be greater than the absolute value of a filter coefficient applied to other neighboring samples. The absolute value of a filter coefficient applied to other neighboring samples may be the same. As an example, a second filter for calculating a vertical variation may be defined as in Equation 4 below.

[Equation 4]

$$V_y = (-a - 2*b - c + f + 2*g + h)/8$$

In Equation 4, $V_y$ represents a vertical variation, and a, b, c, f, g and h represent a top-left sample, a top sample, a top-right sample, a bottom-left sample, a bottom sample and a bottom-right sample, respectively, based on a reference sample (S). According to Equation 4, a vertical variation in a corresponding window may be calculated through a weighted sum operation based on a distance from a reference sample.

As described by referring to FIG. 4, the horizontal/vertical variation may be calculated for all available windows within the neighboring region, respectively. Alternatively, a neighboring region for calculating a horizontal variation and a neighboring region for calculating a vertical variation may be different from each other. Alternatively, a horizontal/vertical variation may be calculated only for a window at a partial position including at least one of first to sixth windows.

Regarding the window at a partial position, it is assumed that the position of a top-left sample of the current block is (0, 0) and the width and height of a current block are W and H, respectively. In this case, the first window may include at least one of a window where the position of a reference sample (S) is (-1, -2), a window where the position of a reference sample (S) is (0, -2) or a window where the position of a reference sample (S) is (1, -2). The second window may include at least one of a window where the position of a reference sample (S) is (W-2, -2), a window where the position of a reference sample (S) is (W-1, -2) or a window where the position of a reference sample (S) is (W, -2). The fourth window may include at least one of a window where the position of a reference sample (S) is (-2, -1), a window where the position of a reference sample (S) is (-2, 0) or a window where the position of a reference sample (S) is (-2, 1). The fifth window may include at least one of a window where the position of a reference sample (S) is (-2, H-2), a window where the position of a reference sample (S) is (-2, H-1) or a window where the position of a reference sample (S) is (-2, H) .

FIG. 6 relates to a method for calculating a sample value variation based on a 1D filter according to the present disclosure.

A neighboring region for deriving a sample value variation and/or an offset may include at least one of the left neighboring region, the top neighboring region or the top-left neighboring region of a current block. The neighboring region may include K reference lines. The K reference lines may be composed of one adjacent reference line adjacent to a current block and (K-1) non-adjacent reference lines not adjacent to a current block.

A filter may be applied in a Kx1 window unit within the neighboring region to calculate a horizontal variation and a filter may be applied in a 1xK window unit to calculate a vertical variation. A Kx1 window may include one reference sample (S) and (K-1) neighboring samples adjacent to a reference sample in a horizontal direction. A 1xK window may include one reference sample (S) and (K-1) neighboring samples adjacent to a reference sample in a vertical direction. Here, K may be an integer of 3, 5, 7 or more and the filter may be symmetrical based on a reference sample. Alternatively, the filter may be asymmetrical based on a reference sample, and in this case, K may be an integer of 4, 6, 8 or more.

Hereinafter, for convenience of a description, as shown in FIG. 6, it is assumed that a neighboring region 600 includes the left neighboring region, the top neighboring region and the top-left neighboring region of a current block 600 and a neighboring region 610 includes three reference lines.

A first filter for calculating the horizontal variation may calculate the variation of neighboring samples adjacent to a reference sample in a horizontal direction. As an example, a first filter for calculating a horizontal variation may be defined as in Equation 5 below.

[Equation 5]

$$V_x = (-a + b)/2$$

In Equation 5, $V_x$ represents a horizontal variation, and a and b represent a left sample and a right sample, respectively, based on a reference sample ($S_1$).

A second filter for calculating the vertical variation may calculate the variation of neighboring samples adjacent to a reference sample in a vertical direction. As an example, a second filter for calculating a vertical variation may be defined as in Equation 6 below.

$$[\text{Equation 6}]$$
$$V_y = (-c + d)/2$$

In Equation 4, $V_y$ represents a vertical variation, and c and d represent a top sample and a bottom sample, respectively, based on a reference sample ($S_0$).

As described by referring to FIG. 4, the horizontal/vertical variation may be calculated for all available windows within the neighboring region, respectively. Alternatively, a neighboring region for calculating a horizontal variation and a neighboring region for calculating a vertical variation may be different from each other. Alternatively, a horizontal/vertical variation may be calculated only for a window at a partial position including at least one of first to sixth windows.

Regarding the window at a partial position, it is assumed that the position of a top-left sample of the current block is (0, 0) and the width and height of a current block are W and H, respectively. In this case, the first window may include at least one of a window where the position of a reference sample (S) is (-1, -1), a window where the position of a reference sample (S) is (0, -1) or a window where the position of a reference sample (S) is (1, -1). The second window may include at least one of a window where the position of a reference sample (S) is (W-2, -1), a window where the position of a reference sample (S) is (W-1, -1) or a window where the position of a reference sample (S) is (W, -1). The fourth window may include at least one of a window where the position of a reference sample (S) is (-1, -1), a window where the position of a reference sample (S) is (-1, 0) or a window where the position of a reference sample (S) is (-1, 1). The fifth window may include at least one of a window where the position of a reference sample (S) is (-1, H-2), a window where the position of a reference sample (S) is (-1, H-1) or a window where the position of a reference sample (S) is (-1, H).

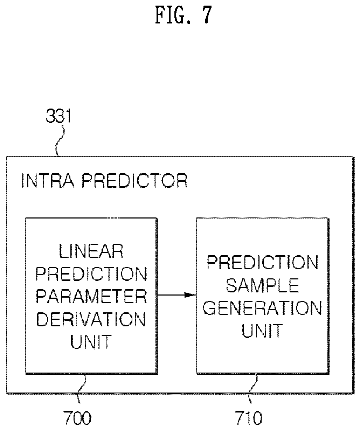

FIG. 7 shows a schematic configuration of an intra predictor 331 performing an intra prediction method according to the present disclosure.

An intra prediction method performed in a decoding device was described by referring to FIGS. 4 to 6, which may be performed in the same manner in the intra predictor 331 of a decoding device, and a detailed description is omitted below.

Referring to FIG. 7, an intra predictor 331 may include a linear prediction parameter derivation unit 700 and a prediction sample generation unit 710.

A linear prediction parameter derivation unit 700 may derive a linear prediction parameter from the neighboring region of a current block.

The linear prediction parameter may include at least one of one or more weights and a predetermined offset. The one or more weights may be derived based on the sample value variation of a neighboring region adjacent to a current block.

A linear prediction parameter derivation unit 700 may calculate at least one of a horizontal variation or a vertical variation by applying a predetermined filter to each window within the neighboring region. In other words, a horizontal variation may be calculated by applying a first filter for calculating a horizontal variation to a window within the neighboring region and a vertical variation may be calculated by applying a second filter for calculating a vertical variation to a window within the neighboring region. A first weight may be derived based on the horizontal variation and a second weight may be derived based on the vertical variation, respectively. A linear prediction parameter derivation unit 700 may derive the offset based on the maximum value, the minimum value, a median value or a weighted average value of samples belonging to the neighboring region of a current block. Alternatively, the offset may be derived based on the horizontal variation and/or the vertical variation.

A prediction sample generation unit 710 may obtain the prediction sample of a current block based on a derived linear prediction parameter. In other words, the prediction sample of a current block may be obtained based on the linear prediction parameter and the position of the prediction sample.

An intra predictor 331 may adaptively perform linear prediction-based intra prediction based on a flag representing whether linear prediction-based intra prediction is applied to a current block. Based on a flag representing that linear prediction-based intra prediction is applied to a current block, a linear prediction parameter derivation unit 700 may derive a linear prediction parameter from the neighboring region of a current block and a prediction sample generation unit 710 may obtain the prediction sample of a current block based on a linear prediction parameter.

Alternatively, an intra predictor 331 may generate the prediction block of a current block based on general DIMD when general_dimd_flag is a first value and may generate the prediction block of a current block through linear prediction-based intra prediction when general_dimd_flag is a second value.

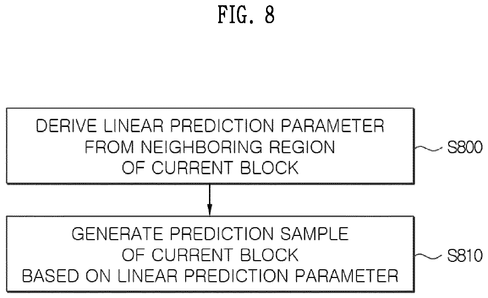

FIG. 8 shows an intra prediction method performed by an encoding device as an embodiment according to the present disclosure.

Referring to FIG. 8, a linear prediction parameter may be derived from the neighboring region of a current block S800.

A method for deriving the linear prediction parameter is the same as described by referring to FIGS. 4 to 6, and a detailed description is omitted here.

The linear prediction parameter may include at least one of one or more weights and a predetermined offset. The one or more weights may be derived based on the sample value variation of a neighboring region adjacent to a current block.

A predetermined filter may be applied to each window within the neighboring region to calculate a sample value variation. In other words, a horizontal variation may be calculated by applying a first filter for calculating a horizontal variation to a window within the neighboring region and a vertical variation may be calculated by applying a second filter for calculating a vertical variation to a window within the neighboring region. A first weight may be derived based on a horizontal variation among the sample value variations and a second weight may be derived based on a vertical variation among the sample value variations. The offset may be derived as the maximum value, the minimum value, a median value or a weighted average value of samples belonging to the neighboring region of a current block. Alternatively, the offset may be derived based on the horizontal variation and/or the vertical variation.

A sample value variation may be calculated from the neighboring region by selectively using any one of a plurality of candidate filters that are pre-defined equally for an encoding device and a decoding device. An optimal candidate filter among the plurality of candidate filters may be determined and index information indicating it may be encoded. Alternatively, any one of a plurality of candidate filters may be selected based on the encoding parameter of a current block. A filter for calculating a horizontal variation and a filter for calculating a vertical variation may be different from each other. A filter applied to the left neighboring region of a current block and a filter applied to the top neighboring region of a current block may be different from each other.

When all samples in the neighboring region are not available, first and second weights may be derived as 0, respectively, and an offset may be derived as a median value according to the bit depth of a sample. Alternatively, when all samples in the neighboring region are not available, the sample of a neighboring region may be replaced with a median value according to the bit depth of a sample and based thereon, a first/second weight and an offset may be derived through the above-described method.

Alternatively, when only a left neighboring region is available within the neighboring region, a second weight and an offset may be derived through the above-described method and a first weight may be derived as 0. When only a left neighboring region is available within the neighboring region, a first/second weight and an offset may be derived through the above-described method based on a left neighboring region. Alternatively, when only a top neighboring region is available within the neighboring region, a first weight and an offset may be derived through the above-described method and a second weight may be derived as 0. When only a top neighboring region is available within the neighboring region, a first/second weight and an offset may be derived through the above-described method based on a top neighboring region. Alternatively, when there is at least one unavailable sample within the neighboring region, a corresponding unavailable sample may be replaced with an available sample in a neighboring region and then, a first/second weight and an offset may be derived through the above-described method.

Referring to FIG. 8, the prediction sample of a current block may be generated based on a derived linear prediction parameters S810.

The prediction sample of a current block may be generated based on the linear prediction parameters and the position of the prediction samples. As an example, the prediction sample of a current block may be generated by applying at least one of a first weight or a second weight described above to the position of a prediction sample. Alternatively, the prediction sample of a current block may be generated by applying at least one of a first weight or a second weight described above to the position of a prediction sample and adding a predetermined offset thereto.

Whether the above-described linear prediction-based intra prediction is applied to a current block may be determined. Based on a determination that linear prediction-based intra prediction is applied to a current block, the steps of S800 and S810 described above may be performed. In addition, based on a determination on whether linear prediction-based intra prediction is applied to a current block, a flag representing whether linear prediction-based intra prediction is applied to a current block may be encoded. As an example, the flag of a first value may be encoded based on a determination that linear prediction-based intra prediction is applied to a current block and the flag of a second value may be encoded based on a determination that linear prediction-based intra prediction is not applied to a current block.

Information on linear prediction-based intra prediction may be encoded so that an encoding device and a decoding device may perform the above-described linear prediction-based intra prediction in the same manner. The information on linear prediction-based intra prediction may include the flag and the flag may be encoded in a unit (e.g., a CU, a PU) where intra prediction is performed.

The flag may be encoded before intra prediction-related information pre-defined in an encoding device and a decoding device and inserted into a bitstream. Alternatively, whether the flag is encoded may be determined based on at least one of the pre-defined intra prediction-related information. Here, pre-defined intra prediction-related information may include at least one of a flag representing whether most probable mode(MPM)-based intra prediction is performed, a flag representing whether planar mode-based intra prediction is performed, a flag representing whether matrix-based intra prediction (MIP) is performed, a flag representing whether intra sub-partitions prediction (ISP) is performed, a flag representing whether decoder-side intra mode derivation (DIMD) is applied or a flag representing whether linear interpolation intra prediction (LIP) is performed.

Alternatively, linear prediction-based intra prediction may be defined as a part of a DIMD mode. As an example, when it is determined that a current block is encoded in a DIMD mode, whether general DIMD is applied to a current block may be determined and a flag (general_dimd_flag) representing this may be additionally encoded. general_dimd_flag of a first value may be encoded based on a determination that general DIMD is applied to a current block. On the other hand, general_dimd_flag of a second value may be encoded based on a determination that linear prediction-based intra prediction, not general DIMD, is applied to a current block.

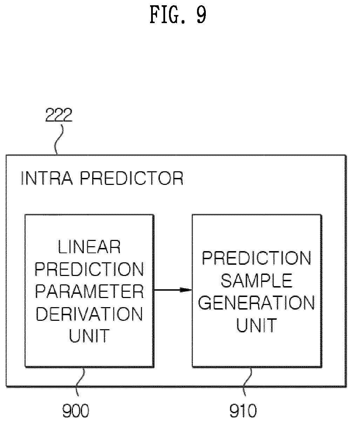

FIG. 9 shows a schematic configuration of an intra predictor 222 performing an intra prediction method according to the present disclosure.

An intra prediction method performed in an encoding device was described by referring to FIG. 8, which may be performed in the same manner in the intra predictor 222 of an encoding device, and a detailed description is omitted below.

Referring to FIG. 9, an intra predictor 222 may include a linear prediction parameter derivation unit 900 and a prediction sample generation unit 910.

A linear prediction parameter derivation unit 900 may derive a linear prediction parameter from the neighboring region of a current block.

The linear prediction parameter may include at least one of one or more weights and a predetermined offset. The one or more weights may be derived based on the sample value variation of a neighboring region adjacent to a current block.

A linear prediction parameter derivation unit 900 may apply a predetermined filter to each window within the neighboring region to calculate at least one of a horizontal variation or a vertical variation. In other words, a horizontal variation may be calculated by applying a first filter for calculating a horizontal variation to a window within the neighboring region and a vertical variation may be calculated by applying a second filter for calculating a vertical variation to a window within the neighboring region. A first weight may be derived based on the horizontal variation and a second weight may be derived based on the vertical variation, respectively. A linear prediction parameter derivation unit 900 may derive the offset based on the maximum value, the minimum value, a median value or a weighted average value of samples belonging to the neighboring region of a current block. Alternatively, the offset may be derived based on the horizontal variation and/or the vertical variation.

A prediction sample generation unit 910 may generate the prediction sample of a current block based on a derived linear prediction parameter. In other words, the prediction sample of a current block may be generated based on the linear prediction parameter and the position of the prediction sample.

An intra predictor 222 may determine whether linear prediction-based intra prediction is applied to a current block. Based on a determination that linear prediction-based intra prediction is applied to a current block, a linear prediction parameter derivation unit 900 may derive a linear prediction parameter from the neighboring region of a current block and a prediction sample generation unit 910 may generate the prediction sample of a current block based on a linear prediction parameter.

In addition, based on a determination on whether linear prediction-based intra prediction is applied to a current block, an entropy encoder 240 may encode a flag representing whether linear prediction-based intra prediction is applied to a current block. The flag may be encoded before intra prediction-related information pre-defined in an encoding device and a decoding device and inserted into a bitstream. Alternatively, whether the flag is encoded may be determined based on at least one of the pre-defined intra prediction-related information.

Alternatively, an intra predictor 222 may determine whether general DIMD is applied to a current block when it is determined that a current block is encoded in a DIMD mode. Based on a determination on whether general DIMD is applied to a current block, an entropy encoder 240 may encode a flag (general_dimd_flag) representing whether general DIMD is applied to a current block.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding apparatus and/or a decoding apparatus according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding apparatus and an encoding apparatus to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

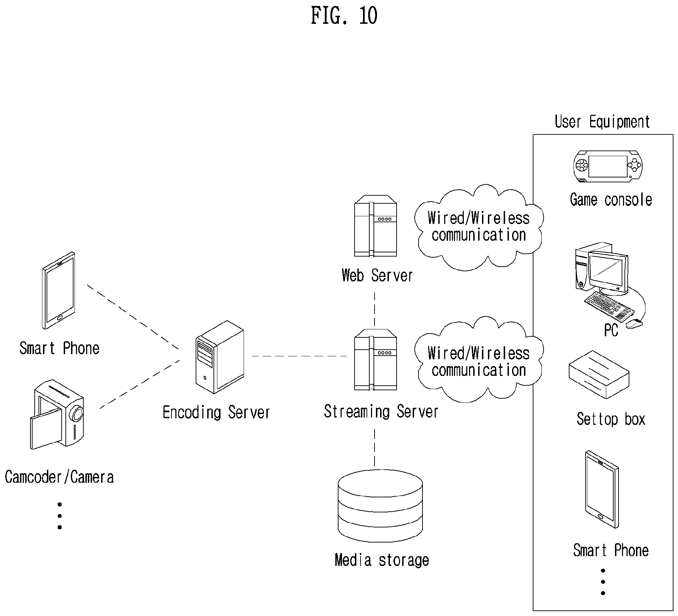

FIG. 10 shows an example of a contents streaming system to which embodiments of the present disclosure may be applied.

Referring to FIG. 10, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

**Claims**

1.  An image decoding method, comprising:

    deriving a linear prediction parameter for a current block from a neighboring region adjacent to the current block; and
    obtaining a prediction sample of the current block based on the linear prediction parameter,
    wherein the linear prediction parameter includes at least one of one or more weights and a predetermined offset,
    wherein the one or more weights include at least one of a first weight for a horizontal variation or a second weight for a vertical variation, and
    wherein the neighboring region includes at least one of a left neighboring region, a top neighboring region, a top-left neighboring region, a top-right neighboring region, or a bottom-left neighboring region.

2.  The image decoding method of claim 1, wherein the horizontal variation and the vertical variation are calculated for one or more windows within the neighboring region, respectively.

3.  The image decoding method of claim 2, wherein a neighboring region for calculating the horizontal variation and a neighboring region for calculating the vertical variation are different from each other.

4.  The image decoding method of claim 3, wherein the horizontal variation is calculated for one or more first windows belonging to at least one of the top neighboring region, the top-left neighboring region, or the top-right neighboring region, and
    wherein the vertical variation is calculated for one or more second windows belonging to at least one of the left neighboring region, the top-left neighboring region, or the bottom-left neighboring region.

5.  The image decoding method of claim 4, wherein the one or more first windows include at least one of a window to which a sample having a same x-coordinate as a top-left sample of the current block belongs or a window to which a sample having a same x-coordinate as a top-right sample of the current block belongs, and
    wherein the one or more second windows include at least one of a window to which a sample having a same y-coordinate as the top-left sample of the current block belongs or a window to which a sample having a same y-coordinate as a bottom-left sample of the current block belongs.

6.  The image decoding method of claim 4, wherein the offset is derived based on one or more samples adjacent to the current block.

7.  The image decoding method of claim 6, wherein the one or more samples adjacent to the current block include at least one of a sample having a same x-coordinate as the prediction sample or a sample having a same y-coordinate as the prediction sample.

8.  The image decoding method of claim 1, wherein the linear prediction parameter is derived based on whether the neighboring region is available for the current block.

9.  The image decoding method of claim 2, wherein at least one of a width and a height of the one or more windows is greater than or equal to 3.

10. The image decoding method of claim 9, wherein any one of the width and the height of the one or more windows is equal to 1.

11. The image decoding method of claim 1, further comprising:

obtaining a first flag representing whether a linear prediction-based intra prediction is applied to the current block from a bitstream,

wherein the linear prediction parameter is adaptively derived based on the first flag.

12. The image decoding method of claim 1, further comprising:

obtaining a second flag representing whether the current block is a block encoded in a DIMD mode from a bitstream; and

obtaining, based on the second flag, a third flag representing whether the current block is a block encoded in a general DIMD mode from the bitstream,

wherein the linear prediction parameter is adaptively derived based on the third flag.

13. An image encoding method, comprising:

deriving a linear prediction parameter for a current block from a neighboring region adjacent to the current block; and

generating a prediction sample of the current block based on the linear prediction parameter,

wherein the linear prediction parameter includes at least one of one or more weights and a predetermined offset,

wherein the one or more weights include at least one of a first weight for a horizontal variation or a second weight for a vertical variation, and

wherein the neighboring region includes at least one of a left neighboring region, a top neighboring region, a top-left neighboring region, a top-right neighboring region, or a bottom-left neighboring region.

14. A computer readable storage medium storing a bitstream generated by an image encoding method, the image encoding method comprising:

deriving a linear prediction parameter for a current block from a neighboring region adjacent to the current block; and

generating a prediction sample of the current block based on the linear prediction parameter,

wherein the linear prediction parameter includes at least one of one or more weights and a predetermined offset,

wherein the one or more weights include at least one of a first weight for a horizontal variation or a second weight for a vertical variation, and

wherein the neighboring region includes at least one of a left neighboring region, a top neighboring region, a top-left neighboring region, a top-right neighboring region, or a bottom-left neighboring region.

15. A method for transmitting data for an image, comprising:

obtaining a bitstream for the image, wherein the bitstream is generated based on deriving a linear prediction parameter for a current block from a neighboring region adjacent to the current block, generating a prediction sample of the current block based on the linear prediction parameter, deriving a residual sample of the current block based on the prediction sample, and encoding the residual sample; and

transmitting the data including the bitstream,

wherein the linear prediction parameter includes at least one of one or more weights and a predetermined offset,

wherein the one or more weights include at least one of a first weight for a horizontal variation or a second weight for a vertical variation, and

wherein the neighboring region includes at least one of a left neighboring region, a top neighboring region, a top-left neighboring region, a top-right neighboring region, or a bottom-left neighboring region.

FIG.1

**FIG.2**

EP 4 554 211 A1

FIG.3

FIG.4

```
┌─────────────────────────────────────────┐
│   DERIVE LINEAR PREDICTION PARAMETER     │
│       FROM NEIGHBORING REGION            │ ～ S400
│          OF CURRENT BLOCK                │
└─────────────────────────────────────────┘
                    │
                    ▼
┌─────────────────────────────────────────┐
│        OBTAIN PREDICTION SAMPLE          │
│           OF CURRENT BLOCK               │ ～ S410
│  BASED ON LINEAR PREDICTION PARAMETER    │
└─────────────────────────────────────────┘
```

FIG. 5

FIG. 6

FIG. 7

FIG. 8

DERIVE LINEAR PREDICTION PARAMETER
FROM NEIGHBORING REGION
OF CURRENT BLOCK ─── S800

GENERATE PREDICTION SAMPLE
OF CURRENT BLOCK
BASED ON LINEAR PREDICTION PARAMETER ─── S810

# FIG. 9

222

INTRA PREDICTOR

| LINEAR PREDICTION PARAMETER DERIVATION UNIT | → | PREDICTION SAMPLE GENERATION UNIT |

900                                    910

FIG. 10

## INTERNATIONAL SEARCH REPORT

| International application No. |
| --- |
| **PCT/KR2023/009499** |

| **A.** | **CLASSIFICATION OF SUBJECT MATTER** |
| --- | --- |

**H04N 19/11**(2014.01)i; **H04N 19/593**(2014.01)i; **H04N 19/105**(2014.01)i; **H04N 19/70**(2014.01)i; **H04N 19/82**(2014.01)i; **H04N 19/176**(2014.01)i

According to International Patent Classification (IPC) or to both national classification and IPC

| **B.** | **FIELDS SEARCHED** |
| --- | --- |

Minimum documentation searched (classification system followed by classification symbols)

H04N 19/11(2014.01); H04N 19/105(2014.01); H04N 19/107(2014.01); H04N 19/117(2014.01); H04N 19/176(2014.01); H04N 19/50(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 주변(adjacent), 선형(linear), 예측(predict), 파라미터(parameter), 가중치(weight), 오프셋(offset), 수평(horizontal), 수직(vertical)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| Y | KR 10-2021-0134407 A (TENCENT AMERICA LLC) 09 November 2021 (2021-11-09)<br>See paragraphs [0013]-[0014], [0022], [0036], [0051]-[0053], [0060], [0086], [0089] and [0122]-[0125]; and figures 3-4, 6c and 7. | 1-15 |
| Y | GHAZNAVI-YOUVALARI, Ramin. Non-CE3: Linear Model-based Intra Prediction (LMIP). JVET-O0404, Joint Video Experts Team (JVET) of ITU-T SG 16 WP 3 and ISO/IEC JTC 1/SC 29/WG 11, 15th Meeting: Gothenburg, SE. pp. 1-3, 02 July 2019.<br>See pages 1-2; and figure 1. | 1-15 |
| A | US 11290736 B1 (LEMON INC.) 29 March 2022 (2022-03-29)<br>See claims 1-18. | 1-15 |
| A | KR 10-2021-0125086 A (HUAWEI TECHNOLOGIES CO., LTD.) 15 October 2021 (2021-10-15)<br>See claims 1-12. | 1-15 |
| A | KR 10-2018-0026718 A (LG ELECTRONICS INC.) 13 March 2018 (2018-03-13)<br>See claims 1-18. | 1-15 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 October 2023** | **17 October 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/009499**

| Patent document cited in search report | | | Publication date (day/month/year) | Patent family member(s) | | | Publication date (day/month/year) |
|---|---|---|---|---|---|---|---|
| KR | 10-2021-0134407 | A | 09 November 2021 | CN | 113767633 | A | 07 December 2021 |
| | | | | EP | 3925221 | A1 | 22 December 2021 |
| | | | | JP | 2022-529645 | A | 23 June 2022 |
| | | | | JP | 7317994 | B2 | 31 July 2023 |
| | | | | US | 11595666 | B2 | 28 February 2023 |
| | | | | US | 2023-0171412 | A1 | 01 June 2023 |
| | | | | WO | 2021-158615 | A1 | 12 August 2021 |
| US | 11290736 | B1 | 29 March 2022 | CN | 114765685 | A | 19 July 2022 |
| | | | | US | 2022-0232241 | A1 | 21 July 2022 |
| KR | 10-2021-0125086 | A | 15 October 2021 | CN | 113545063 | A | 22 October 2021 |
| | | | | CN | 113545063 | B | 28 April 2023 |
| | | | | EP | 3928517 | A1 | 29 December 2021 |
| | | | | JP | 2022-521757 | A | 12 April 2022 |
| | | | | US | 2021-0385440 | A1 | 09 December 2021 |
| | | | | WO | 2020-169113 | A1 | 27 August 2020 |
| KR | 10-2018-0026718 | A | 13 March 2018 | US | 10848759 | B2 | 24 November 2020 |
| | | | | US | 2018-0234679 | A1 | 16 August 2018 |
| | | | | WO | 2017-018664 | A1 | 02 February 2017 |

Form PCT/ISA/210 (patent family annex) (July 2022)